# EUROPÄISCHE PATENTSCHRIFT

(11) **EP 1 526 241 B1**
(45) Veröffentlichungstag und Bekanntmachung des Hinweises auf die Patenterteilung: **23.07.2008**
(21) Anmeldenummer: 04024806.4
(22) Anmeldetag: 19.10.2004
(51) Int. Cl.: E05F 15/00, B60J 10/00, B60J 5/10

(54) **Profilanordnung für Einklemmschutz und Spritzgusswerkzeug**
Anti-nipping arrangement and injection mold
Arrangement anti-pincement et moule d'injection

(30) Priorität: 20.10.2003 DE 10349650
(43) Veröffentlichungstag der Anmeldung: 27.04.2005
(73) Patentinhaber: Mayser GmbH & Co. KG, 89073 Ulm (DE)
(72) Erfinder: Scherraus, Marc, Dipl.-Ing., 89075 Ulm (DE)
(74) Vertreter: Patentanwälte Ruff, Wilhelm, Beier, Dauster & Partner

(56) Entgegenhaltungen:
- EP-A- 0 829 385
- DE-A- 10 036 213
- DE-A- 10 047 085
- US-A- 5 072 080
- US-A- 5 566 504
- US-A- 5 832 665
- US-A1- 2003 081 369
- US-B1- 6 297 605

## Beschreibung

Die Erfindung betrifft eine Profilanordnung mit einem insbesondere als Kunststoffspritzgussteil ausgeführten Trägerprofil und mit einem zumindest abschnittsweise elastisch nachgiebigen Schaltprofil, das mittels eines Befestigungsbereiches mit einem korrespondierenden Verbindungsabschnitt des Trägerprofils verbunden ist, wobei der Verbindungsabschnitt des Trägerprofils und der Befestigungsbereich des Schaltprofils als formschlüssig miteinander verbindbare Steckprofilierungen ausgeführt sind.

Eine derartige Profilanordnung ist aus der US 2003/0081369 A1 bekannt. Die bekannte Profilanordnung weist ein als Hohlprofil ausgeführtes Schaltprofil aus, das mittels eines T-förmig gestalteten Befestigungsbereiches in einem korrespondierenden, C- oder T-förmig gestalteten Nutbereich eines Trägerprofiles formschlüssig gehalten ist.

Aus der DE 10036213 A1 ist ein druckempfindliches Sensorprofil bekannt, das an einem C-förmig gestalteten Haltesteg befestigt ist. Das Sensorprofil weist zwei klauenartig gestaltete Profilabschnitte auf, die über einen Schlitz voneinander getrennt sind.

Weitere Profilanordnungen sind aus dem Stand der Technik zur Absicherung von angetriebenen, selbsttätig beweglichen Verschlusselementen wie Heckklappen von Kraftfahrzeugen oder Sicherheitstüren in Gebäuden oder an Maschinen bekannt. Profilanordnungen werden einstückig oder als Baugruppe aus einem stabilen Trägerprofil und einem elastischen Schaltprofil verwirklicht. Bei einer Montage der Baugruppe kann eine Klebeverbindung zwischen dem Trägerprofil und dem Schaltprofil vorgesehen werden. Diese Klebeverbindung kann durch Aufbringen eines doppelseitigen Klebebandes auf das Schaltprofil und einem nachfolgenden Aufkleben des Schaltprofils auf das Trägerprofil verwirklicht werden. Um eine gute Anhaftung des Klebebandes an dem Schaltprofil und dem Trägerprofil zu gewährleisten, sind Vorarbeiten wie Reinigungsvorgänge oder das Aufbringen von flüssigen Aktivatoren notwendig, die zusammen mit den Kosten für das Klebeband einen signifikanten Kostenanteil an der Profilanordnung ausmachen.

Die US-Patentschrift US 6,297,605 B1 zeigt in diesem Zusammenhang eine Vorrichtung für eine elektrisch angetriebene Heckklappe, die mit einer Einklemmschutzeinrichtung ausgestattet ist. Dazu ist an einem Rahmen der Heckklappe eine auf einem deformierbaren Träger aufgebrachte Schaltleiste vorgesehen, die mit einer Steuereinheit verbunden ist. Die Steuereinheit beeinflusst einen Antriebsmotor für die Bewegung der Heckklappe. Bei einer Schließbewegung der Heckklappe ruft ein zwischen der Heckklappe und dem Rahmen der Heckklappe eingeklemmtes Körperteil oder ein eingeklemmter Gegenstand eine Betätigungskraft auf die Schaltleiste hervor. Damit wird in der Schaltleiste ein elektrischer Kontakt hergestellt, der ein elektrisches Signal auslöst. Dieses elektrische Signal wird an die Steuereinrichtung des Antriebsmotors geleitet. Die Steuereinheit leitet eine Richtungsumkehr des Antriebsmotors ein, um die Heckklappe aufschwenken zu lassen und das eingeklemmte Körperteil oder den eingeklemmten Gegenstand freizugeben. Da in Anbetracht einer Trägheit der Steuereinheit, des Antriebsmotors und der Heckklappe keine sofortige Richtungsumkehr der Heckklappe bei Auslösung der Schaltleiste verwirklicht werden kann, muss zur Vermeidung von Verletzungen oder Beschädigungen ein Pufferweg zwischen der Schaltleiste und dem Rahmen der Heckklappe gewährleistet sein. Dazu ist die Schaltleiste auf dem deformierbaren Träger aufgebracht, der mit einer geringen Betätigungskraft mindestens so weit deformiert werden kann, dass bis zur Richtungsumkehr der Heckklappe schwerwiegende Verletzungen oder Beschädigungen vermieden werden können.

Die Aufgabe der Erfindung besteht darin, eine Profilanordnung der eingangs genannten Art zu schaffen, durch die in kostengünstiger Weise eine sichere Verbindung zwischen Trägerprofil und Schaltprofil gewährleistet werden kann.

Diese Aufgabe wird durch die Merkmale des Anspruchs 1 gelöst.

In Ausgestaltung der Erfindung ist vorgesehen, dass die Steckprofilierung des Trägerprofils als L-förmig gestaltete Steganordnung gestaltet ist, die einen um etwas mehr als 90° hakenartig abgewinkelten, nasenförmigen Halteabschnitt umfasst, und dass die Steckprofilierung des Schaltprofiles eine auf den nasenartigen Halteabschnitt der Steganordnung abgestimmte Hohlkammer aufweist, die ebenfalls eine um mehr als 90° ausgeführte Abwinklung besitzt. Dadurch wird eine verbesserte formschlüssige Verkrallung des Stegschenkels der Nut an dem Halteabschnitt der Steganordnung erzielt.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1a: zeigt in perspektivischer Darstellung eine schematische Ansicht eines Heckbereichs eines Kraftfahrzeuges mit einer elektrisch angetriebenen Heckklappe und beidseitig eines Heckklappenrahmens vorgesehenen Profilanordnungen,
- Fig. 1b: zeigt in perspektivischer Darstellung eine schematische Ansicht eines Heckbereichs eines Kraftfahrzeuges mit einer elektrisch angetriebenen Heckklappe und beidseitig der Heckklappe vorgesehenen Profilanordnungen,
- Fig. 2: in isometrischer Darstellung eine Profilanordnung mit seitlich einzuschiebendem Schaltprofil,
- Fig. 3: in ebener Schnittdarstellung eine Profilanordnung nach Fig. 2 in einer Ruheposition,
- Fig. 4: in ebener Schnittdarstellung eine Profilanordnung nach Fig. 2 und Fig. 3 in einer Funktionsposition,
- Fig. 5: in isometrischer Darstellung eine Profilanordnung zum orthogonalen Einschieben des Schaltprofils mit nachfolgender flächenparalleler Verriegelungsbewegung,
- Fig. 6: in isometrischer Darstellung ein Schaltprofil zum orthogonalen Verrasten,
- Fig. 7: in isometrischer Darstellung ein Schaltprofil zum orthogonalen Einschieben in ein Trägerprofil mit veränderlichem Nutquerschnitt,
- Fig. 8: in ebener Schnittdarstellung eine Profilanordnung nach Fig. 6 oder Fig. 7 in einer Ruheposition,
- Fig. 9: in isometrischer Darstellung ein Schaltprofil zum orthogonalen Aufstecken,
- Fig. 10: in ebener Schnittdarstellung eine Profilanordnung nach Fig. 9 in einer Ruheposition,
- Fig. 11: in perspektivischer Darstellung eine schematische Ansicht einer Spritzgussform,
- Fig. 12: in vergrößerter Schnittdarstellung einen Ausschnitt eines Heckbereichs eines Kraftfahrzeugs im Bereich eines Heckklappenrahmens, mit der Ausführungsform einer erfindungsgemäßen Profilanordnung,
- Fig. 13: in weiter vergrößerter Schnittdarstellung einen Ausschnitt der Darstellung nach Fig. 12 und
- Fig. 14: in erneut vergrößerter Schnittdarstellung das Schaltprofil der Ausführung nach den Fig. 12 und 13.

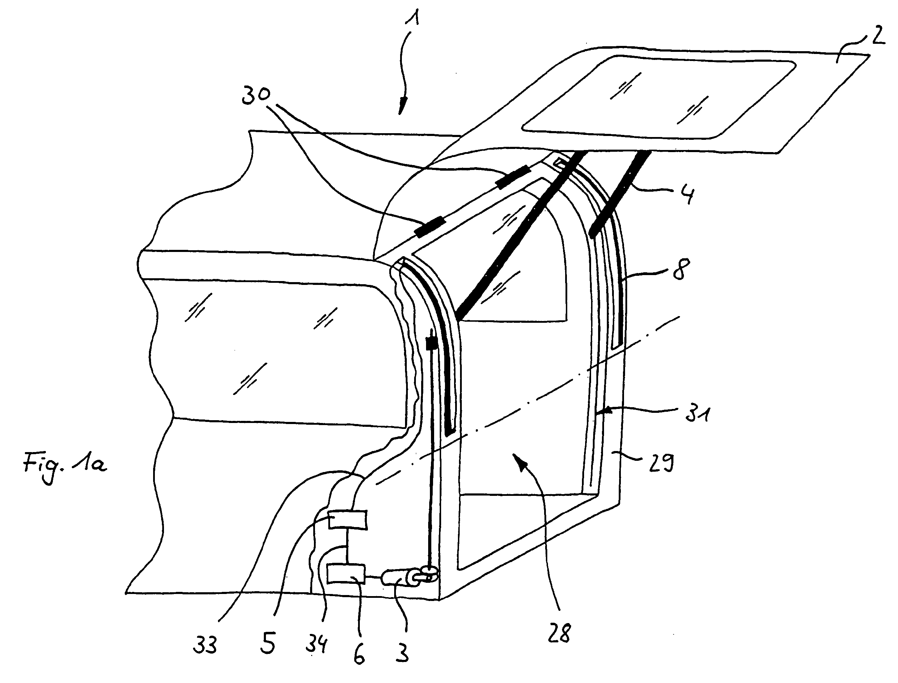

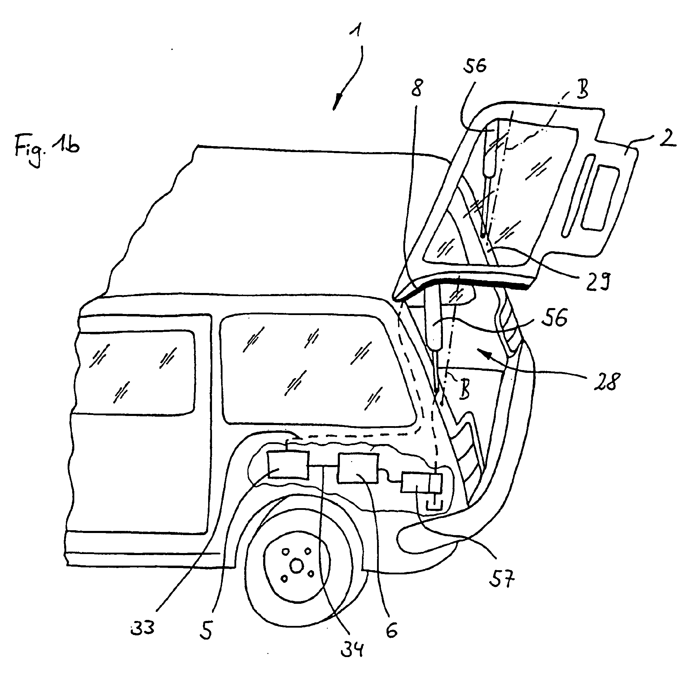

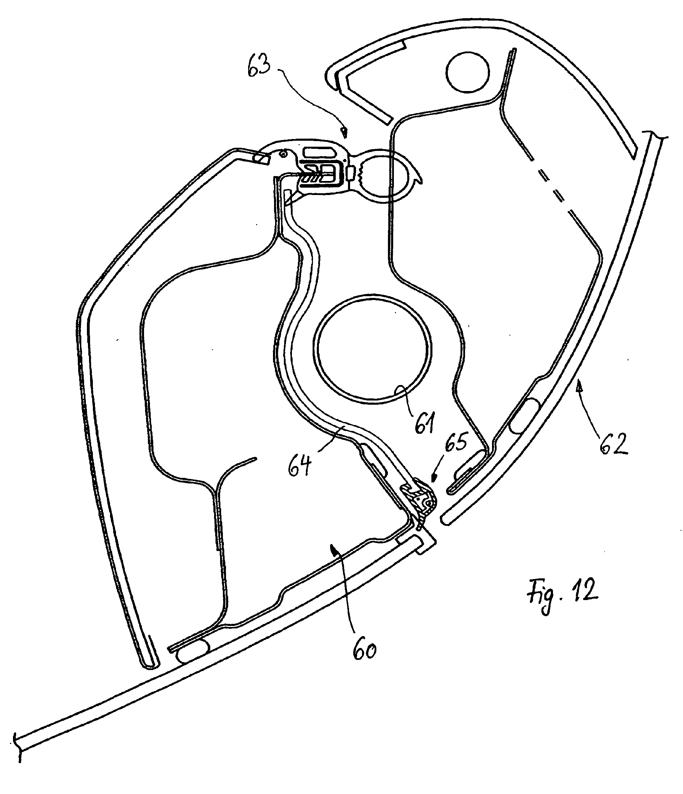

Die nachfolgend anhand der Figuren 1 bis 11 beschriebenen Ausführungsformen gehören nicht zur erfindungsgemäßen Ausführungsform, soweit nicht in der Beschreibung zu der erfindungsgemäßen Ausführungsform nach den Figuren 12 bis 14 auf die vorhergehenden Figuren verwiesen wird.

Ein in Fig. 1 a dargestellter Heckbereich 1 eines Kraftfahrzeuges weist eine rückwärtige Laderaumöffnung 28 auf, die von einem Heckklappenrahmen 29 umrandet ist. An einer Oberseite des Heckklappenrahmens 29 ist eine Heckklappe 2 über Heckklappenscharniere 30 schwenkbeweglich mit dem Heckklappenrahmen 29 verbunden. An Innenseiten der Laderaumöffnung 28 sind beidseitig Führungsschienen 31 vorgesehen, in denen jeweils eine Betätigungsstange 4 mittels einer flexiblen Schraubspindel 32 schiebebeweglich geführt ist. Die Schraubspindel 32 wird von einem Motorantrieb 3 in Rotation versetzt und ermöglicht somit eine Verschiebung der Betätigungsstange 4, die mit der Schraubspindel 32 über eine nicht näher dargestellte Schlossmutter verbunden ist. Durch die Bewegung der Betätigungsstangen 4 längs der Führungsschienen 31 kann eine Betätigungskraft auf die Heckklappe 2 ausgeübt werden, die zum Öffnen oder Verschließen der Heckklappe benutzbar ist. Dabei wird der Motorantrieb von einer schematisch dargestellten Steuereinheit 6 beeinflusst. Zur Verwirklichung eines Einklemmschutzes für einen unteren Bereich des Heckklappenrahmens 29 wird eine Auswertung von Motorumdrehungen pro Zeiteinheit in Abhängigkeit von einer Stellung der Heckklappe 2 herangezogen. Für einen oberen Bereich des Heckklappenrahmens 29 kann eine Auswertung von Motorumdrehungen pro Zeiteinheit in Anbetracht eines deutlich verkleinerten Hebelarms zwischen Heckklappe 2 und Scharnieren 7 nicht verwirklicht werden. Ein eingeklemmter Gegenstand oder Körperteil würde wegen des geringen Hebelarms nicht zu einer zuverlässigen Auslösung der für den unteren Heckklappenbereich vorgesehenen Einklemmschutzvorrichtung führen. Daher wird eine als Schutzleiste 8 ausgeführte Profilanordnung jeweils beidseitig im oberen Bereich des Heckklappenrahmens 29 vorgesehen. Die Schutzleiste 8 ist über eine Signalleitung 33 mit einer Auswerteinheit 5 verbunden. Die Auswerteinheit 5 führt permanent eine Ruhestromkontrolle der Schutzleiste 8 durch, um eventuell auftretende Beschädigungen mechanischer oder elektrischer Art detektieren zu können. Sofern eine Störung des Ruhestroms auftritt, kann ein Störungssignal an einen Benutzer des Kraftfahrzeugs weitergegeben werden. Bei Bewegung der Heckklappe 2 kann in der Auswerteinheit 5 bei Einklemmen eines Körperteils oder Gegenstandes ein von der Schutzleiste 8 erzeugtes Signal detektiert und in einen Schaltimpuls gewandelt werden. Der Schaltimpuls wird über eine Schaltleitung 34 an die Steuereinheit 6 zur Beeinflussung des Motorantriebs 3 weitergeleitet und bewirkt dort eine Drehrichtungsumkehr des Motorantriebs 3. Damit kann der eingeklemmte Körperteil oder Gegenstand wieder freigegeben werden.

Im Unterschied zur Fig. 1a ist bei der Fig. 1b eine Anbringung der Schutzleiste 8 an einer dem Heckklappenrahmen 29 zugewandten Innenseite der Heckklappe vorgesehen. Weiterhin ist der Antrieb der Heckklappe durch Druckmittelzylinder 56 vorgesehen, die von einer nicht dargestellten Druckmittelpumpe versorgt werden. Die Druckmittelzylinder 56 sind beim dargestellten Ausführungsbeispiel derart beweglich ausgeführt, dass sie sowohl die Öffnungs- als auch die Schließbewegung der Heckklappe durchführen. Alternativ ist es in nicht näher dargestellter Weise möglich, zusätzlich zu dem Druckmittelzylinder beweglich angeordnete Betätigungsstangen B vorzusehen, die die Öffnungs- und/oder die Schließbewegung der Heckklappe steuern. Den Betätigungsstangen B ist vorzugsweise ein elektrischer Antrieb zugeordnet. Die Betätigungsstangen B sind schematisch strichpunktiert dargestellt. Das von der Schutzleiste 8 im Falle eines Einklemmens von Gegenständen oder Körperteilen erzeugte Signal wird in der Auswerteinheit 5 detektiert und in einen Schaltimpuls gewandelt. Der Schaltimpuls wird über eine Schaltleitung 34 an die Steuereinheit 6 zur Beeinflussung der Hydraulikpumpe geleitet und bewirkt dort eine Drehrichtungsumkehr. Damit fahren die Druckmittelzylinder 56 die Heckklappe 2 wieder auf und der eingeklemmte Körperteil oder Gegenstand wird freigegeben. Eine Kombination der Schaltleisten 8 an der Heckklappe 2 mit anderen, nicht dargestellten elektrischen, hydraulischen oder pneumatischen Heckklappenantrieben ist ebenso möglich. Die nachfolgende Beschreibung ist auf die Ausführungsform nach Fig. 1b bezogen. Sie gilt in gleicher Weise aber auch für die Ausführungsform nach Fig. 1a.

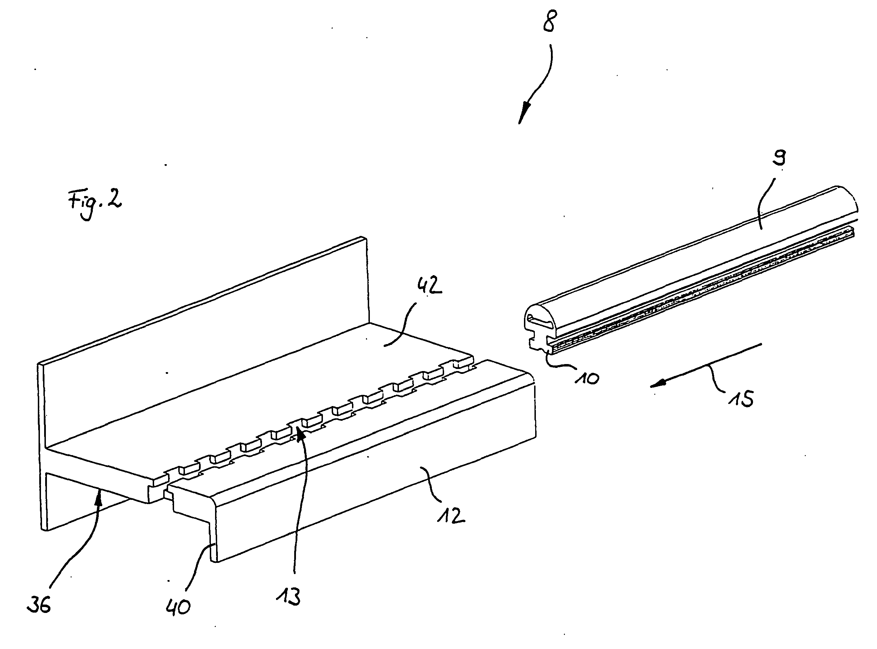

In Fig. 2 ist ein als Schaltleiste 9 ausgeführtes Schaltprofil dargestellt, das für eine Montage an ein als Halteschiene 12 ausgeführtes Trägerprofil in einer Schieberichtung 15 vorgesehen ist. Dadurch kann ein im wesentlichen T-förmig als Ankerprofil 10 ausgeführter Befestigungsbereich des Schaltprofils in eine T-Nut 13 des Verbindungsabschnitts der Halteschiene 12 eingezogen werden. Durch die korrespondierende Gestaltung des Ankerprofils 10 und der T-Nut 13 kommt es nach Einschieben der Schaltleiste 9 in die Halteschiene 12 zu einer formschlüssigen Verbindung, die in nahezu alle Raumrichtungen mit Kräften beaufschlagbar ist.

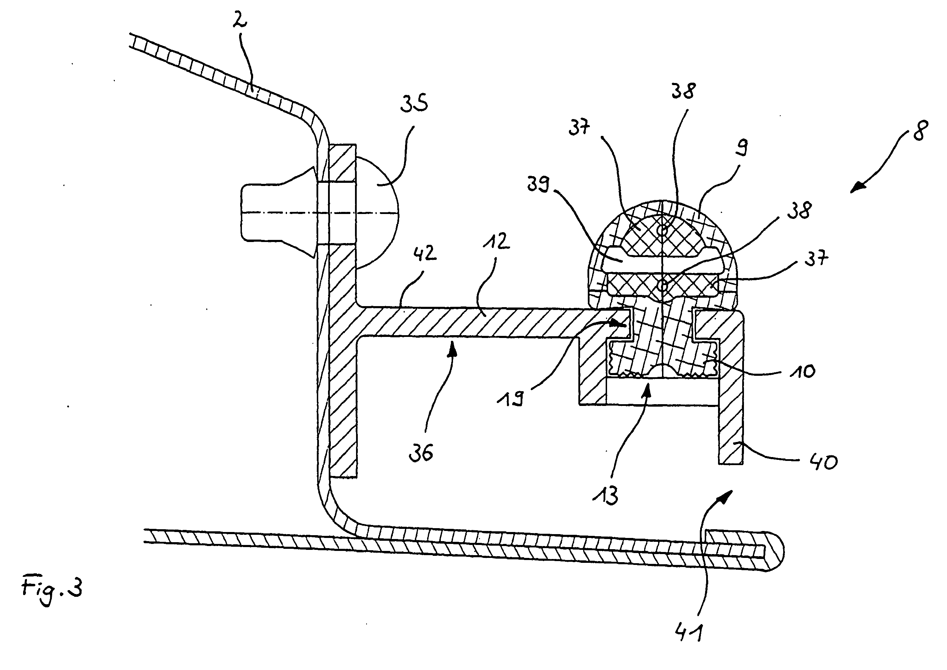

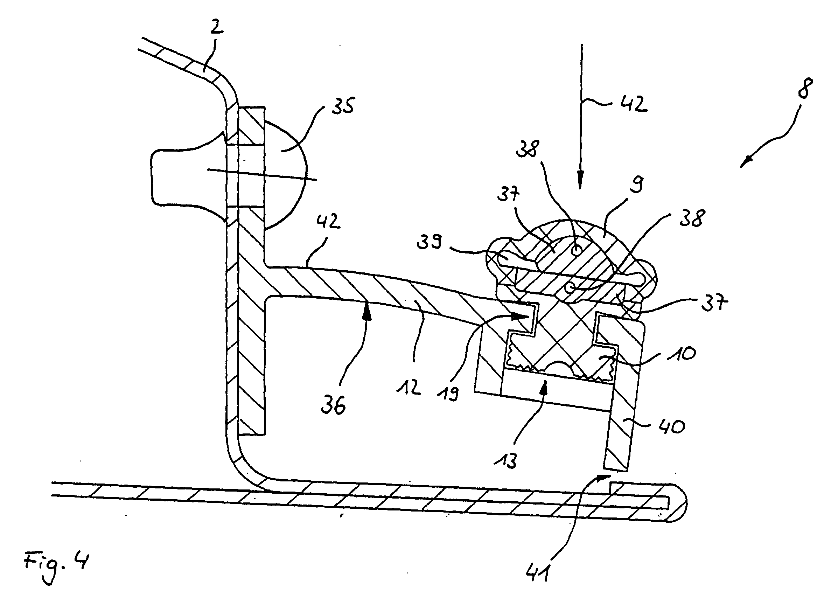

Nach Montage der Schaltleiste 9 in die Halteschiene 12 ist die Schutzleiste 8 hergestellt. Gemäß Fig. 3 bilden das Ankerprofil 10 und die T-Nut 13 gegenseitige Hinterschnitte 19, wodurch die gewünschte formschlüssige Verbindung zwischen der Schaltleiste 9 und der Halteschiene 12 erzielt wird. Dabei werden das Ankerprofil 10 und die Schaltleiste 9 einstückig im Extrusionsverfahren aus elastischen Werkstoffen hergestellt. Der für das Ankerprofil 10 verwendete Werkstoff ist dabei härter als der für die Schaltleiste 9 verwendete Werkstoff, da das Ankerprofil 10 vorwiegend zur Kraftübertragung vorgesehen ist, während die Schaltleiste 9 eine hohe Elastizität aufweisen soll. In einem durch das Ankerprofil 10 und die Schaltleiste 9 gebildeten Hohlraum sind durch einen Schaltspalt 39 getrennte Leitgummis 37 vorgesehen, die sich längs der Schaltleiste 9 erstrecken und die jeweils von einem elektrischen Versorgungsdraht 38 durchzogen sind. In einer Ruhestellung der Schaltleiste 9 lässt der Schaltspalt 39 keinen elektrischer Kontakt zwischen den Leitgummis 37 zu. Bei einer Krafteinwirkung, wie sie beim Einklemmen von Gegenständen oder Körperteilen zwischen Heckklappe 2 und Heckklappenrahmen auftreten können, kommt es zu einer Deformation der Schaltleiste 9, wodurch die Leitgummis 37 in Kontakt treten und ein elektrischer Stromfluss stattfindet. Diese Situation ist in Fig. 4 dargestellt. Um gleichzeitig einen Quetschschutz bis zu einer Bewegungsumkehr der Heckklappe 2 zu gewährleisten, ist die Halteschiene 12 mit einer elastischen Biegezone 36 versehen, die ein Ausweichen der Schutzleiste 8 und des eingeklemmten Gegenstandes ermöglicht. Dabei ist ein Sicherheitsspalt 41 zwischen einer Anschlagblende 40, die ein Bestandteil der Halteschiene 12 ist und der Heckklappe 2 vorgesehen. Die Anschlagblende 40 ist so dimensioniert, dass ein Bremsweg der Heckklappe 2 bis zur Bewegungsumkehr geringer ist als der Sicherheitsspalt 41. Dadurch kann gewährleistet werden, dass keine ernsthaften Quetschungen für eingeklemmte Körperteile oder Gegenstände durch die Heckklappe 2 auftreten. Die Halteschiene 12 ist über Kunststoffniete 35 mit der Heckklappe 2 verbunden.

Bei der in Fig. 4 gewählten Darstellung ist im Gegensatz zu Fig. 3 eine Funktionsposition der Schutzleiste 8 dargestellt, bei der es durch eine Betätigungskraft 42 zu einer Deformation der Schaltleiste 9 und dadurch zu einer Kontaktierung der Leitgummis 37 kommt. Außerdem findet eine Auslenkung der Halteschiene entlang der Biegezone 36 statt. Dabei reduziert sich der Sicherheitsspalt 41 solange, bis entweder eine Bewegungsumkehr der Heckklappe 2 erfolgt oder die Anschlagblende 40 auf die Heckklappe 2 aufläuft.

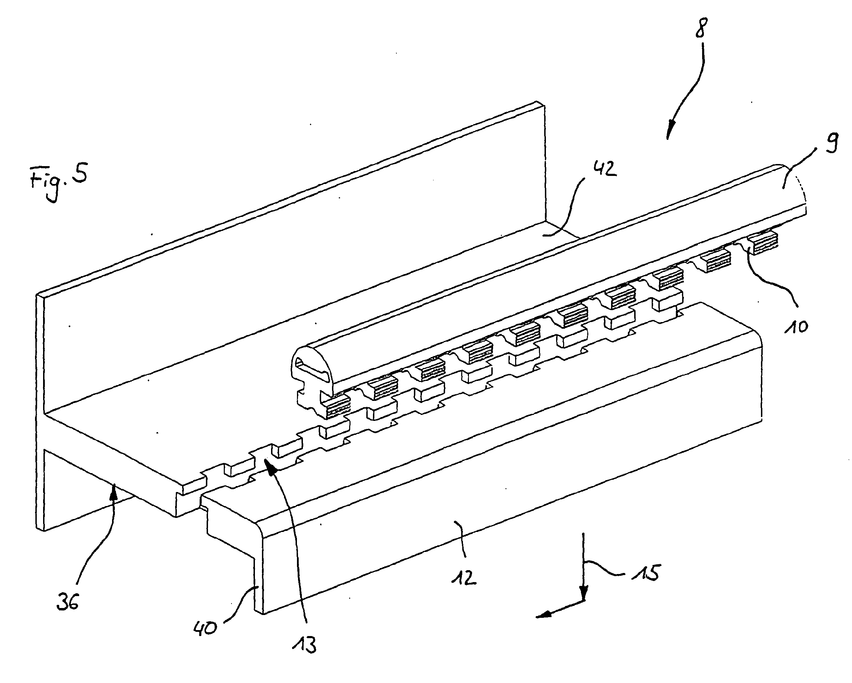

Für eine Vereinfachung der Montage der Schaltleiste 9 in die Halteschiene 12 ist gemäß Fig. 5 eine teilweise Entfernung des Ankerprofils 10 vorgesehen, so dass eine Montage gemäß der Schieberichtung 15, wie sie in Fig. 5 dargestellt ist, ermöglicht wird. Für den Montagevorgang kann das Ankerprofil 10 an als Haltenasen 17 ausgeführten Rastelementen vorbei in orthogonaler Richtung zu einer Berührfläche 42 der Halteschiene 12 in die T-Nut 13 eingeschoben werden und anschließend durch eine Schiebebewegung parallel zur Berührfläche 42 in Formschluss mit der Halteschiene 12 gebracht werden. Dabei ist es unerheblich, ob die T-Nut 13, wie in Fig. 5 dargestellt, stirnseitig offen ist oder lediglich abschnittsweise über eine Länge der Halteschiene 12 erstreckt ist.

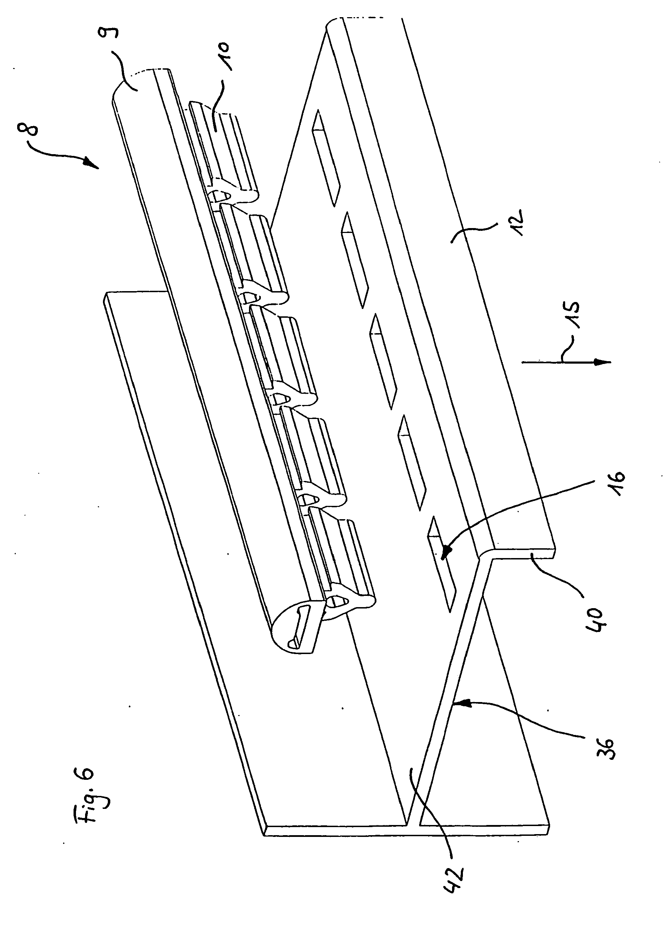

Bei der in Fig. 6 dargestellten Schutzleiste 8 ist das Ankerprofil 10 ebenfalls teilweise entfernt und zusätzlich mit einer symmetrischen Einführnase 43 versehen. Dadurch wird ein Eindrücken in als Schlitze 16 ausgeführte Rastaussparungen erleichtert. Dabei weisen die Schlitze 16 einen durchgehend gleichen Querschnitt auf und bilden nach dem Eindrücken der Schutzleiste 8 mit dem Ankerprofil 10 den gewünschten Hinterschnitt.

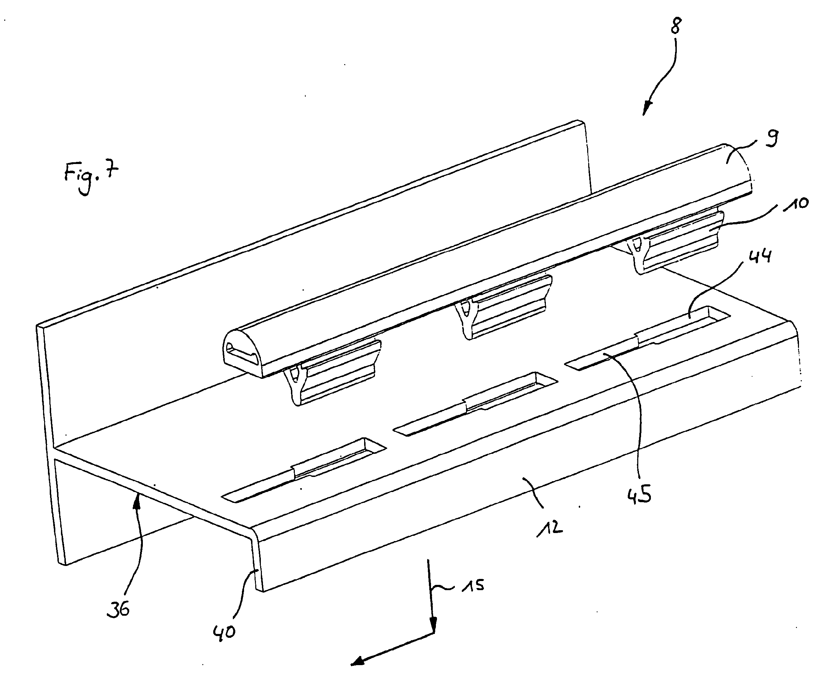

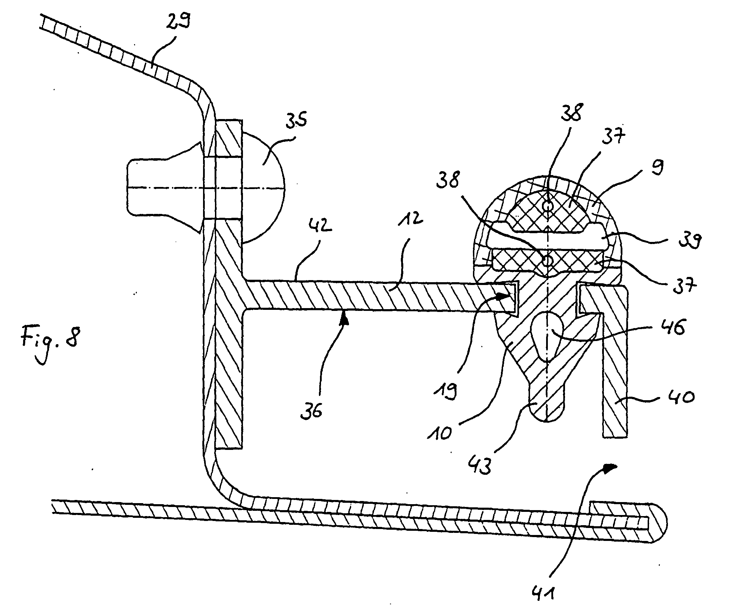

Im Gegensatz dazu zeigt die Fig. 7 eine Schutzleiste 8, die ebenfalls nur abschnittsweise mit einem Ankerprofil 10 versehen ist, das eine Einführnase 43 aufweist. Die Halteschiene 12 hingegen ist abweichend von Fig. 6 mit Schlitzen 16 versehen, die in einer parallelen und in einer orthogonalen Richtung zur Berührfläche 42 einen abschnittsweise unterschiedlichen Querschnitt aufweisen. Dabei ist ein als Einführquerschnitt 44 ausgeführter breiter Öffnungsquerschnitt sowie ein als Haltequerschnitt 45 ausgeführter schmaler Öffnungsquerschnitt in der Halteschiene 12 vorgesehen. Während der Einführquerschnitt 44 zumindest nahezu einer Breite des Ankerprofils 10 entspricht, ist der Haltequerschnitt 45 auf eine als Verbindungssteg 14 ausgeführte Steganordnung der Schutzleiste 8 abgestimmt, um einen Hinterschnitt bilden zu können. Eine Montagesituation, wie sie sich durch die Verwendung der in den Fig. 6 und 7 gezeigten Halteschienen ergeben kann, ist in Fig. 8 dargestellt. Dabei tritt insbesondere eine Deformationskammer 46, die in der Einführnase 43 des Ankerprofils 10 vorgesehen ist, deutlich zutage. Die Deformationskammer 46, erleichtert ein Ausweichen des Ankerprofils 10 beim Eindrücken der Schutzleiste 8 in die Halteschiene 12.

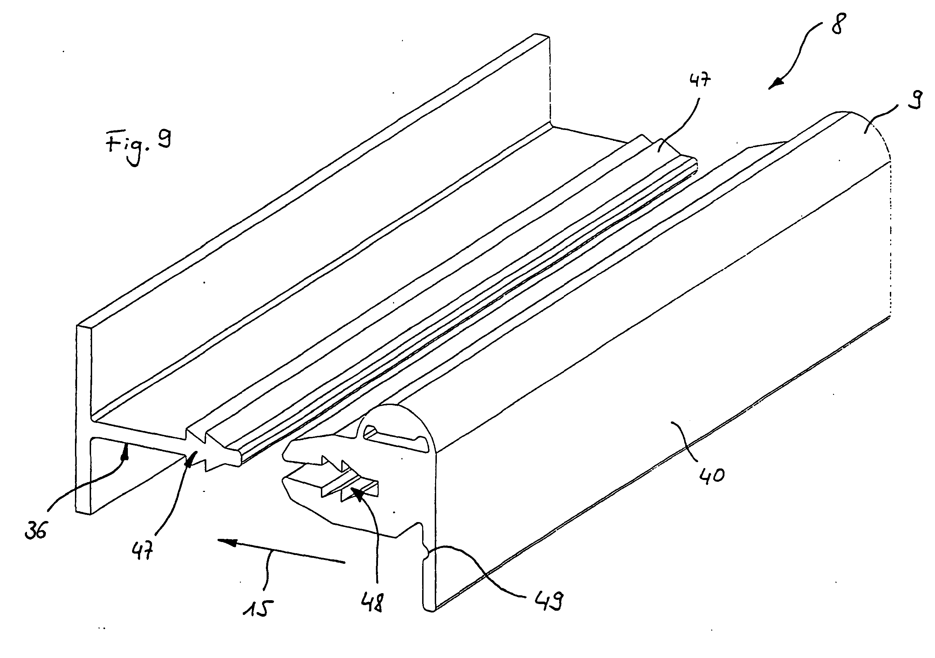

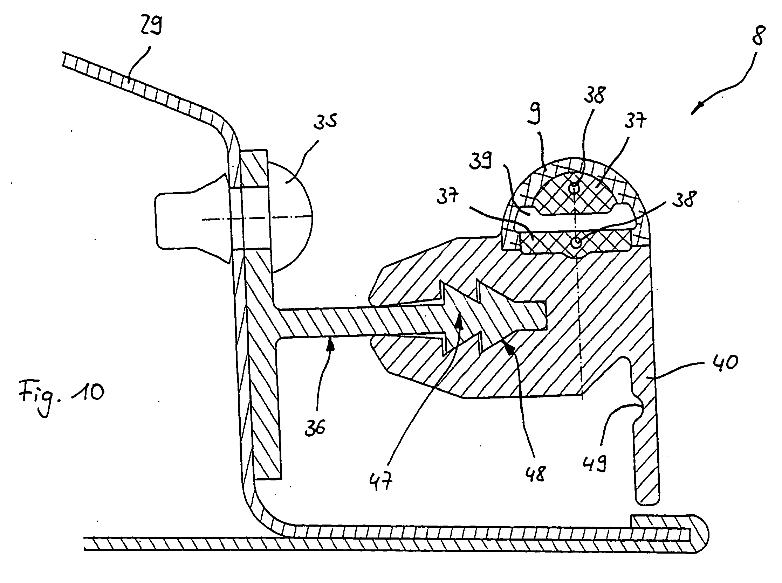

Im Unterschied zu den bisher beschriebenen Ausführungsformen ist für die Schutzleiste 8 gemäß Fig. 9 eine umgekehrte Anordnung von T-Nut und Ankerprofil dargestellt. Dazu ist an der Halteschiene 12 eine erhabene Keilprofilierung 47 vorgesehen, auf die die Schaltleiste 9 in Schieberichtung 15 formschlüssig aufsteckbar ist. In der Schaltleiste 9 ist dazu eine Profilnut 48 vorgesehen, die im wesentlichen auf eine Geometrie der Keilprofilierung 47 angepasst ist. Der Sicherheitsspalt zwischen der Schutzleiste 8 und dem nicht dargestellten Heckklappenrahmen wird bei der in Fig. 9 dargestellten Ausführungsform durch eine an der Schaltleiste 9 vorgesehene flexible Anschlagblende 40 zumindest teilweise überbrückt, so dass die Schaltleiste 9 auch einen optisch ansprechenden Abschluss der Schutzleiste 8 gegenüber dem Heckklappenrahmen verwirklicht. Die Anschlagblende 40 ist dabei zusätzlich mit einer Sollknickstelle 49 versehen. Das Zusammenspiel von Heckklappenrahmen 29, Halteschiene 12 und Schaltleiste 9, wie sie in der Fig. 9 beschrieben sind, lässt sich in der Fig. 10 nachvollziehen. Hier wird auch der innere Aufbau der Schaltleiste 9 detaillierter dargestellt. Die Leitgummis 37 bilden in einer Ruhestellung der Schaltleiste 9 den Schaltspalt 39, wobei die Leitgummis 37 mit Versorgungsdrähten 38 bestückt sind. Die Schaltleiste 9 ist über ihre Profilnut 48 formschlüssig mit der Keilprofilierung 47 der Halteschiene 12 verbunden und bildet mittels der Anschlagblende 40 einen optischen Abschluss der Schutzleiste 8 an dem Heckklappenrahmen 29. Bei dieser Ausführungsform kann der Sicherheitsspalt 41 bereits in der Ruhestellung zumindest nahezu verschwindend sein, da der für die Vermeidung von Quetschungen notwendige Restweg nahezu ausschließlich über die Deformation der Anschlagblende, insbesondere um die Sollknickstelle 49 herum, gewährleistet werden kann.

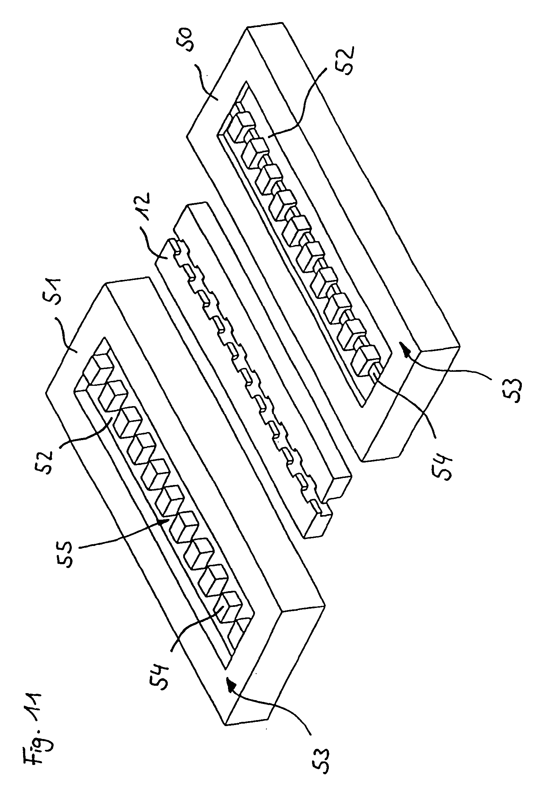

Bei den in Fig. 11 schematisch dargestellten Formhälften einer Kunststoffspritzgussform ist erkennbar, dass sowohl die obere Formhälfte 50 als auch die untere Formhälfte 51 jeweils einen Teil der Außenkontur der Halteschiene 12 als Formkavität 52 aufweisen. Die Formkavität 52 wird bei Verwendung der Kunststoffspritzgussform durch flächiges Zusammenfügen der oberen Formhälfte 50 und der unteren Formhälfte 51 in einer gemeinsamen, als Trennebene 53 gestalteten Trennfläche gebildet. Bei anderen Kunststoffspritzgussformen zur Produktion von Halteschienen kann die Trennfläche anstelle einer Trennebene 53 auch als gekrümmte, dreidimensionale Oberfläche ausgeführt sein. In der Formkavität 52 sind in beiden Formhälften 50, 51 jeweils Formkerne 54 vorgesehen, die starr in der Formkavität vorgesehen sind. In der oberen Formhälfte 50 wird durch die Formkeme 54 eine geschlossene Reihe gebildet, die bei einem Einspritzen von plastifiziertem Kunststoffmaterial zu einer durchgängigen und hinterschnittenen Nut im Trägerprofil führt. In der unteren Formhälfte 51 ist eine Anordnung der Formkeme 54 gewählt, bei der Zwischenräume 55 zwischen den einzelnen Formkernen 54 vorgesehen ist. Durch die Zwischenräume 55 werden die für den Zusammenhalt der Halteschiene 12 notwendigen Querstege gebildet. Die Formhälften 50, 51 einschließlich der Formkerne 54 sind so gestaltet, dass nach dem Einspritzen und Aushärten des Kunststoffmaterials die Formhälften in einfacher Weise aufgeklappt werden können. Das fertige Trägerprofil kann entnommen werden, ohne dass noch zusätzliche Entformungsmaßnahmen wie das Bewegen oder Entfernen von Schiebern oder Formkernen erfolgen musste.

Bei der erfindungsgemäßen Ausführungsform nach den Fig. 12 bis 14 ist eine Heckklappe 62 relativ zu einem Heckklappenrahmen der Karosserietragstruktur eines Kraftfahrzeugs in analoger Weise zur Ausführungsform nach Fig. 1a schwenkbeweglich gelagert. Die Heckklappe 62 ist analog zu der Ausführungsform nach Fig. 1a mit einem motorischen Schließantrieb versehen, der eine automatische Schließbewegung der Heckklappe 62 ermöglicht. Um in einer schließstellung der Heckklappe 62 einen umlaufend dichten Abschluss mit dem karosserieseitigen Heckklappenrahmen 60 zu erzielen, ist ein Dichtprofil 63 vorgesehen, das auf einen stegartigen Flansch eines Karosseriebleches des Heckklappenrahmens und damit der Karosserietragstruktur aufgesteckt ist. Das Dichtprofil 63 wird durch ein Elastomerprofil gebildet, in dem eine metallische, U-förmig ausgebildete Profilverstärkung vorgesehen ist, um einen sicheren kraftschlüssigen Halt des Dichtprofiles 63 auf dem Flansch des Karosseriebleches zu bewirken. Für weitere Details wird auf die Darstellung auf Fig. 12 verwiesen.

In Öffnungsrichtung ist die Heckklappe 62 durch Gasdruckfedern analog der Ausführungsform nach Fig. 1a beweglich. In Fig. 12 ist eine derartige Gasdruckfeder mit dem Bezugszeichen 61 versehen.

Bei geöffneter Heckklappe 62 ist ein zur Heckklappenöffnung nach innen weisender Bereich des Heckklappenrahmens 60 mit einem Verkleidungsteil 64 versehen, um das Karosserieblech des Heckklappenrahmens 60 zu verdecken. Das Verkleidungsteil 64 ist aus Kunststoff hergestellt und erstreckt sich zumindest im wesentlichen über eine gesamte Höhe des jeweiligen seitlichen Rahmenteiles des Heckklappenrahmens 60. Die seitlichen Rahmenteile des Heckklappenrahmens 60 flankieren die Heckklappenöffnung auf beiden Seiten und sind vorzugsweise Teile von D-Säulen der Karosserietragstruktur.

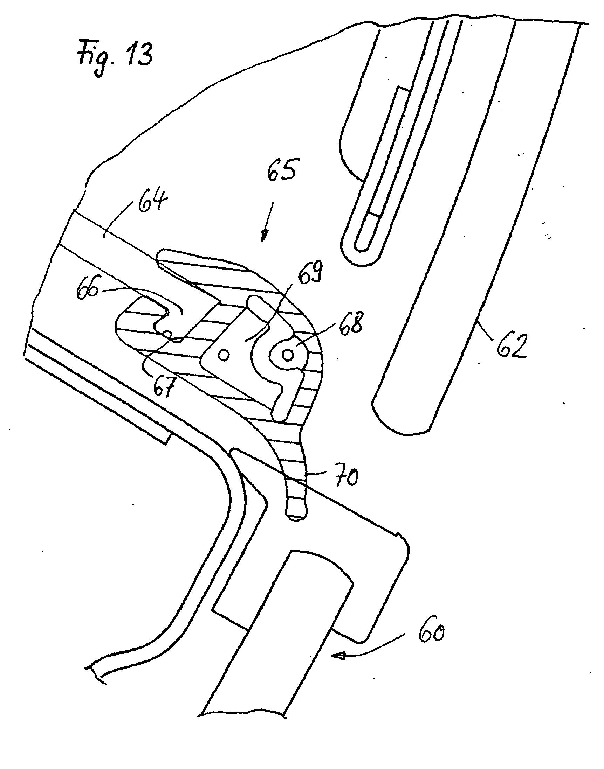

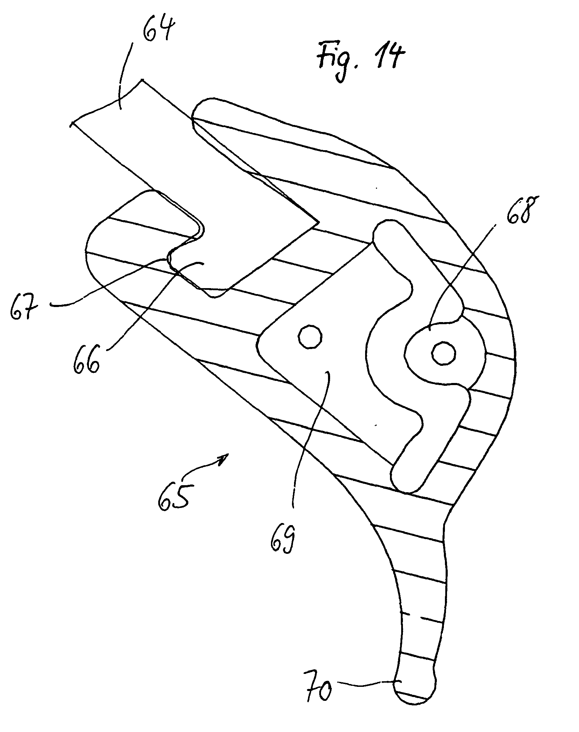

Um bei einer motorischen Schließbewegung der Heckklappe 62 zu verhindern, dass Gegenstände oder Gliedmaßen wie Finger oder Hände zwischen seitlichen Flanken der Heckklappe 62 und den seitlichen Rahmenteilen des Heckklappenrahmens 60 eingeklemmt werden, ist ein Einklemmschutz in Form eines Schaltprofils 65 vorgesehen, dessen grundsätzliche Funktion den zuvor beschriebenen Ausführungsformen entspricht. Wie anhand der Fig. 13 und 14 erkennbar ist, ist das Schaltprofil 65 zum einen mit einem Befestigungsabschnitt versehen, der in nachfolgend näher beschriebener Weise mit dem Verkleidungsteil 64 verbunden ist. Zum anderen ist ein Schaltkammerabschnitt innerhalb des Schaltprofiles vorgesehen, der durch einen geschlossenen Hohlprofilabschnitt gebildet wird. In dem Hohlprofilabschnitt sind zwei einander gegenüberliegende, elektrisch leitende Kontaktbereiche 68, 69 vorgesehen, die in unbelastetem Zustand voneinander getrennt sind. Zwischen den Kontaktbereichen 68, 69 besteht im unbelasteten Zustand ein Isolierspalt. Sobald von außen her gegen die Außenfläche des Schaltprofiles 65 ein Gegenstand oder ein Körperglied gedrückt wird, wird das Schaltprofil deformiert, wodurch auch der Kontaktbereich 68 sich an den Kontaktbereich 69 annähert. Je nach Höhe der Druckbelastung gelangt der Kontaktbereich 68 mit dem Kontaktbereich 69 in Berührung, wodurch ein entsprechendes Schaltsignal erzielt wird, das in grundsätzlich bekannter Weise von einer elektronischen Steuereinheit entsprechend ausgewertet wird. Vorzugsweise bewirkt dieses Schaltsignal eine Umkehrung des motorischen Schließantriebes, wodurch der eingeklemmte Gegenstand oder das eingeklemmte Körperglied wieder freikommt und aus dem verbleibenden Spalt zwischen Heckklappe 62 und Heckklappenrahmen 60 herausgezogen werden kann. Hierdurch ist es möglich, insbesondere Verletzungsgefahren für Personen, die sich an dem Heckbereich des Kraftfahrzeugs befinden, bei einer Schließbewegung der Heckklappe 62 zu vermeiden.

Das Schaltprofil 65 ist mit einer Nut 67 versehen, die - im Querschnitt gesehen - L-artig ausgeführt ist und zu einer Längsseite des Schaltprofiles 65 hin offen ist. Vorzugsweise ist die Nut 67, die als Steckprofilierung im Sinne der Erfindung dient, zudem zu wenigstens einem ihrer Stirnenden offen. Auf die Nut 67 abgestimmt weist das Verkleidungsteil 64 eine korrespondierend L-förmig gestaltete Steganordnung 66 auf, auf die das Schaltprofil 65 von einem Stirnende der Steganordnung 66 her mit seiner Nut 67 aufgezogen werden kann. Das Schaltprofil 65 erstreckt sich über die gesamte Länge des Verkleidungsteiles 64 und ist an einem zur Außenseite gewandten Längsrandbereich des Verkleidungsteiles 64 vorgesehen. Vorzugsweise wird das Schaltprofil 65 vor der Montage des Verkleidungsteiles 64 am Heckklappenrahmen 60 auf das Verkleidungsteil 64 aufgezogen und anschließend gemeinsam mit dem Verkleidungsteil 64 an dem Heckklappenrahmen 60 montiert. Der Befestigungsabschnitt des Schaltprofiles 65 ist begrenzt elastisch nachgiebig ausgeführt. Die Nut 67 weist einen gegenüber dem Querschnitt der Steganordnung 66 geringfügig verjüngten Querschnitt auf, wie anhand der Darstellung nach Fig. 14 erkennbar ist. Beim Aufziehen der Nut 67 auf die Steganordnung 66 wird diese somit unterhalb eines nasenförmigen Halteabschnittes der Steganordnung 66 elastisch aufgeweitet, so dass in Aufziehrichtung ein Kraftschluss zwischen dem Befestigungsabschnitt des Schaltprofiles 65 und der Steganordnung 66 des Verkleidungsteiles 64 entsteht. Quer zur Aufziehrichtung ist der Befestigungsabschnitt des Schaltprofiles 65 zudem formschlüssig an dem Verkleidungsteil 64 gehalten. Hierbei hintergreift ein Stegschenkel der Nut 67 den nasenförmigen Halteabschnitt der Steganordnung 66. Der nasenförmige Halteabschnitt ist um etwas mehr als 90° hakenartig abgewinkelt, um eine weiter verbesserte, formschlüssige Verkrallung des Stegschenkels der Nut 67 an dem Halteabschnitt der Steganordnung 66 zu erzielen (Fig. 14). Die Nut 67 weist eine auf den nasenartigen Halteabschnitt der Steganordnung 66 abgestimmte Hohlkammer auf, die ebenfalls eine um mehr als 90° ausgeführte Abwinklung besitzt. Für weitere geometrische Details wird auf die maßstäblich vergrößerte Darstellung nach Fig. 14 verwiesen.

## Patentansprüche

1. Profilanordnung mit einem insbesondere als Kunststoffspritzgussteil ausgeführten Trägerprofil (64) und mit einem zumindest abschnittsweise elastisch nachgiebigen Schaltprofil (65), das mittels eines Befestigungsbereiches mit einem korrespondierenden Verbindungsabschnitt des Trägerprofils (64) verbunden ist, wobei der Verbindungsabschnitt des Trägerprofils (64) und der Befestigungsbereich des Schaltprofils (65) als formschlüssig miteinander verbindbare Steckprofilierungen (66, 67) ausgeführt sind, **dadurch gekennzeichnet, dass** die Steckprofilierungen (66, 67) des Schaltprofils (65) und des Trägerprofils (64) im Querschnitt L-förmig gestaltet sind, dass das Schaltprofil (65) einen Schaltkammerabschnitt aufweist, der durch einen geschlossenen Hohlprofilabschnitt gebildet ist,
dass die Steckprofilierung des Trägerprofils (64) als L-förmig gestaltete Steganordnung (66) gestaltet ist, die einen um etwas mehr als 90° hakenartig abgewinkelten, nasenförmigen Halteabschnitt umfasst, und dass die Steckprofilierung (67) des Schaltprofiles (65) eine auf den nasenartigen Halteabschnitt der Steganordnung (66) abgestimmte Hohlkammer aufweist, die ebenfalls eine um mehr als 90° ausgeführte Abwinklung besitzt.

## Claims

1. A profiled arrangement having a profiled carrier (64) in the form of, in particular, an injection-molded plastic part, and an at least section-wise, elastic, profiled, switch strip (65) attached to an associated attachment section of the profiled carrier (64) by an attachment zone, where the attachment section of the profiled carrier (64) and the attachment zone of the profiled switch strip (65) are configured in the form of mutually joinable, form-fitting, press-on profilings (66, 67), wherein the press-on profilings (66, 67) of the profiled switch strip (65) and the profiled carrier (64) have L-shaped cross-sections and the profiled switch strip (65) has a switch-chamber section formed by a closed, hollow, profiled section, the press-on profiling of the profiled carrier (64) is configured in the form of an L-shaped rim arrangement (66) that grips a raked, lug-shaped, retaining section angled at slightly more than 90°, and the press-on profiling (67) of the profiled switch strip (65) has a hollow chamber, which is also angled at slightly more than 90°, configured in conformity with the lug-shaped retaining section of the rim arrangement (66).

## Revendications

1. Agencement de profilé avec un profilé support (64) réalisé notamment sous forme de pièce moulée en matière plastique injectée et avec un profilé commutateur (65) cédant au moins localement par élasticité, profilé commutateur qui au moyen d'une zone de fixation est relié avec un segment de liaison correspondant du profilé support (64), le segment de liaison du profilé support (64) et la zone de fixation du profilé commutateur (65) étant réalisés sous forme de géométries profilées emboîtables (66, 67), reliables entre elles par adhérence des formes, **caractérisé en ce que** les géométries profilées emboîtables (66, 67) du profilé commutateur (65) et du profilé support (64) présentent une section en L, **en ce que** le profilé commutateur (65) présente un segment à chambre de commutation formé par un segment fermé de profilé creux, **en ce que** la géométrie profilée emboîtable du profilé support (64) se présente sous la forme d'un agencement à nervure (66) en L, agencement qui englobe un segment de retenue en saillie coudé en crochet à un peu plus de 90°, et **en ce que** la géométrie profilée emboîtable (67) du profilé commutateur (65) présente une chambre creuse harmonisée avec le segment de retenue en saillie de l'agencement à nervure (66), chambre qui possède elle aussi une partie coudée à plus de 90°.
